# EUROPÄISCHE PATENTSCHRIFT

(11) **EP 2 134 931 B1**
(45) Veröffentlichungstag und Bekanntmachung des Hinweises auf die Patenterteilung: **15.06.2011**
(21) Anmeldenummer: 08714309.5
(22) Anmeldetag: 28.03.2008
(51) Int. Cl.: F01L 1/047

(54) **ZUSAMMENGESETZTE ANTRIEBSWELLE**
COMPOSITE DRIVE SHAFT
ARBRE D'ENTRAÎNEMENT EN PLUSIEURS PIÈCES

(30) Priorität: 19.04.2007 DE 102007018920
(43) Veröffentlichungstag der Anmeldung: 23.12.2009
(73) Patentinhaber: ThyssenKrupp Presta TecCenter AG, 9492 Eschen (LI)
(72) Erfinder: MÜLLER, Oskar, A-6721 Thüringerberg (AT); MEUSBURGER, Peter, FL-9493 Mauren (LI)
(74) Vertreter: Hofmann, Ralf U.
(86) Internationale Anmeldenummer: PCT/AT2008/000113
(87) Internationale Veröffentlichungsnummer: WO 2008/128259

(56) Entgegenhaltungen:
- EP-A- 0 170 378
- EP-A- 0 486 876
- WO-A-93/22558
- JP-A- 58 138 214
- US-A- 5 136 780
- US-A1- 2007 022 984

## Beschreibung

Die Erfindung bezieht sich auf eine Antriebswelle, welche mindestens zwei in Richtung der Drehachse der Antriebswelle beabstandete, koaxiale Hohlwellen, die jeweils eine innere Öffnung aufweisen, und mindestens eine Funktionseinheit umfasst, die mindestens ein, bezogen auf die Richtung der Drehachse der Antriebswelle zwischen einer ersten und einer zweiten der Hohlwellen angeordnetes Funktionsteil und erste und zweite in Richtung der Drehachse der Antriebswelle sich erstreckende Eingriffsabschnitte aufweist, von denen der erste Eingriffsabschnitt in der inneren Öffnung der ersten Hohlwelle und von denen der zweite Eingriffsabschnitt in der inneren Öffnung der zweiten Hohlwelle angeordnet ist, wobei die Eingriffsabschnitte der Funktionseinheit in die inneren Öffnungen der Hohlwellen unter Ausbildung eines jeweiligen Presssitzes eingepresst sind und die ersten und zweiten Hohlwellen über die Funktionseinheit starr miteinander verbunden sind, wobei die äußeren Oberflächen der Eingriffsabschnitte Materialerhebungen und/oder die die innere Öffnung der Hohlwelle begrenzende Wand der jeweiligen Hohlwelle im Endabschnitt, in dem der Presssitz mit dem jeweiligen Eingriffsabschnitt der Funktionseinheit ausgebildet ist, Materialerhebungen aufweist. Weiters bezieht sich die Erfindung auf ein Verfahren zur Herstellung einer solchen Antriebswelle.

Im besonderen zielt die Erfindung auf gebaute Nockenwellen. Dabei ist unter einer Nockenwelle allgemein eine Welle mit mindestens einem Nocken zu verstehen, wobei im Betriebszustand der Nocken mit einem Nockenfolger in Kontakt steht. Durch eine Verdrehung der Welle wird der Nockenfolger nach dem in der Nockenkontur verankertem Ablauf bzw. "Programm" betätigt. So sind also unter dem Begriff Nockenwelle auch Verstellwellen für mechanische variable Ventiltriebe zu subsumieren. In diesem Fall sind die Nocken als Kurvenscheiben (beispielsweise als Exzenterscheiben) ausgebildet und entsprechend als Verstellscheiben auf der Welle angeordnet. Derartige Wellen werden auch als Exzenterwellen bezeichnet.

Zur Herstellung gebauter Nockenwellen werden Funktionselemente wie insbesondere Nockenantriebsräder, Lager, Axiallagerscheiben, Sensorringe, Nockenwellenversteller und die Tragwelle einzeln hergestellt. Anschließend werden die Funktionselemente auf der Tragwelle, die als Träger und zur Übertragung der Drehung dient, positioniert und mittels eines geeigneten Fügeverfahrens auf der Welle befestigt. Im Stand der Technik sind eine Reihe von Verfahren zur Herstellung gebauter Nockenwellen bekannt.

In der DE 4121951 C1 ist ein Verfahren zur Herstellung gebauter Nockenwellen vorgestellt, bei dem auf der Tragwelle Bereiche mittels gewindeähnlicher Rollierung über den ursprünglichen Wellendurchmesser hinaus aufgeweitet werden und jeweils anschließend an die Aufweitung eines Bereichs ein Nocken, dessen innere Ausnehmung einen Durchmesser aufweist, der kleiner ist als der Außendurchmesser des aufgeweiteten Wellenbereiches, achsial aufgeschoben und auf den aufgeweiteten Wellenbereich aufgepresst wird. Der Nocken besitzt einen Grundkreisbereich und einen Ventilerhebungsbereich. Der Durchmesser des Nockens im Grundkreisbereich ist entsprechend größer als der Durchmesser der inneren Ausnehmung des Nockens. Die Differenz dieser beiden Durchmesser wird als Gurtbreite oder als Bandstärke des Nockens im Grundkreisbereich bezeichnet. Die Bandstärke muss entsprechend dick ausgebildet sein, damit sie die Spannungen des Fügeverfahrens aufnehmen kann. Auf diese Weise ist durch den Durchmesser der Tragwelle ein minimal möglicher Durchmesser des Nockens im Grundkreisbereich vorgegeben. Übliche Richtwerte für minimale Bandstärken liegen im Bereich von ca. 4 mm.

In vielen Anwendungsfällen der Motorentechnik ist es jedoch gewünscht, einen relativ großen Durchmesser der Tragwelle zu besitzen, da die Tragwelle häufig gleichzeitig als Lagerdurchmesser für die Lagerung der Antriebswelle bzw. der Nockenwelle verwendet wird. Zudem bieten große Durchmesser der Tragwelle Vorteile in Bezug auf die Steifigkeit der gesamten Antriebswelle. Andererseits ist es beispielsweise im Fall von Nockenwellen aus motorischen Gründen häufig gewünscht, dass die Durchmesser der Nocken im Grundkreisbereich möglichst klein sind. Wie ausgeführt sind diese Durchmesser bei gegebenem Durchmesser der Tragwelle aber durch die erforderlichen Bandstärken der Nocken limitiert.

Die JP 2004 011 699 A zeigt eine gebaute Nockenwelle, bei der fertig bearbeitete Nocken auf der Tragwelle festgesetzt werden. Zur Befestigung der Nocken sind an diesen beidseitig achsial abstehende hohlzylindrische Fortsätze vorgesehen. Diese Fortsätze sind auf aufgeweitete Wellenbereiche, die mit umlaufenden Erhebungen versehen sind, aufgepresst. Hierzu müssen diese hohlzylindrischen Fortsätze ausreichende Bandstärken aufweisen. Auch die Nocken müssen minimale Bandstärken von einigen mm aufweisen.

Aus der DE 198 37 385 A1 ist eine als gebaute Nockenwelle ausgebildete Antriebswelle der eingangs genannten Art bekannt. Die Nockenwelle umfasst Nocken, ein Ketten- bzw. Zahnriemenrad, Hohlwellen, die Zwischenstücke bilden, und ein kappenförmiges Endstück. Diese separaten Teile werden zusammengesetzt und mittels eines zentral wirkenden Zugelements achsial kraftschlüssig und/oder kraftschlüssig mit Formschlusssicherung verspannt. Ein Hauptnachteil dieser Nockenwelle besteht in der geringen Steifigkeit einer derartig verspannten Welle bzw. der sehr hohen Anforderung an das Zugelement, üblicherweise eine Dehnschraube. Weiters wird durch den Einsatz eines Zugelements das Gewicht und der Materialbedarf erhöht, da der innere Hohlraum des Rohrs mit dem Zugelement zumindest teilweise ausgefüllt wird. Zur Zentrierung der Nocken dienen in einer Ausführungsform rohrstückförmige Zentrierstücke. Ein jeweiliges Zentrierstück sitzt mit einer geeigneten Passung im Nocken und weist beidseitig den Nocken überragende Eingriffsabschnitte auf, mit denen es in den Endabschnitten der benachbarten Hohlwellen aufgenommen ist, sodass über dieses Zentrierstück der Nocken gegenüber den Hohlwellen und die Hohlwellen zueinander zentriert werden. Der Nocken zusammen mit dem Zentrierstück kann als Funktionseinheit im Sinne des Oberbegriffs des Patentanspruchs 1 angesehen werden.

Aus der EP 0 969 216 A2 geht eine Nockenwelle hervor, bei welcher Nocken mit dazwischen angeordneten Abstandshülsen auf eine Welle aufgefädelt sind. Die aufgefädelten Nocken und Abstandshülsen sind achsial zwischen Abschlusshülsen eingespannt.

Aus der EP 0 486 876 A2 geht eine Festlegung von Nocken auf Nockenwellen mittels Rollierungen oder Rändeln hervor.

Eine Antriebswelle der eingangs genannten Art geht aus der US 4 638 683 hervor. Die Antriebswelle stellt eine aus mehreren Teilwellen ausgebildete Nockenwelle dar, wobei keramische Nockenwellen-Abschnitte, welche Funktionseinheiten darstellen, über Hohlwellen miteinander verbunden sind. Eingriffsabschnitte der Funktionseinheiten sind hierbei in die inneren Öffnungen der Hohlwellen unter Ausbildung eines jeweiligen Presssitzes eingepresst. Zur zusätzlichen Sicherung gegenüber einer Verdrehung dienen Kugeln oder sind die Eingriffsabschnitte polygonal ausgebildet.

Siehe auch EP 0 172 378 A1.

Aufgabe der Erfindung ist es, eine vorteilhafte Antriebswelle bereitzustellen, bei der im Bereich mindestens eines zwischen zwei Hohlwellen angeordneten Funktionsteils der Außendurchmesser des Funktionsteils, zumindest über einen Umfangsabschnitt des Funktionsteils, schlank gehalten werden kann, wobei die Antriebswelle einfach, robust und mit einem relativ geringen Gewicht ausgebildet werden kann. Erfindungsgemäß gelingt dies durch eine Antriebswelle mit den Merkmalen des Anspruchs 1.

Bei einer Antriebswelle gemäß der Erfindung sind die Eingriffsabschnitte der Funktionseinheit in die inneren Öffnungen der Hohlwellen eingepresst. Die Eingriffsabschnitte sind somit durch einen Presssitz bzw. unter Ausbildung eines Pressverbandes in den inneren Öffnungen der Hohlwellen gehalten. Da das Einpressen in Richtung der Drehachse der Antriebswelle erfolgt, kann man auch von einer Längspressverbindung sprechen. Die Hohlwellen sind dadurch über die Funktionseinheit starr miteinander verbunden.

Das mindestens eine Funktionsteil kann insbesondere ein solches Teil sein, das bei der Drehung der Antriebswelle ein Getriebeglied bildet, um ein mit der Antriebswelle zusammenwirkendes Getriebeglied anzutreiben, vorzugsweise ein Nocken oder ein Zahnrad. Weiters kann das mindestens eine Funktionsteil beispielsweise auch ein die Antriebswelle lagerndes Lagerteil, ein Sensorring oder ein die Antriebswelle antreibendes Antriebsrad sein.

In einer bevorzugten Ausführungsform der Erfindung ist die Antriebswelle eine Nockenwelle, wobei die mindestens eine Funktionseinheit als Funktionsteil mindestens einen Nocken oder eine Kurvenscheibe aufweist.

In anderen Ausführungsformen der Erfindung kann die Antriebswelle beispielsweise eine Zahnradwelle, bei der die mindestens eine Funktionseinheit als Funktionsteil mindestens ein Zahnrad aufweist, oder eine Ausgleichswelle sein.

Die Längsachsen der ersten und zweiten Hohlwellen fallen mit der Drehachse der Antriebswelle zusammen. Vorzugsweise weisen die ersten und zweiten Hohlwellen die gleichen Außen- und Innendurchmesser auf. Vorteilhafterweise fallen auch die Längsachsen der Eingriffsabschnitte der Funktionseinheit mit der Drehachse der Antriebswelle zusammen.

Vorzugsweise ist ein jeweiliger in einer inneren Öffnung einer Hohlwelle durch einen Presssitz gehaltener Eingriffsabschnitt der Funktionseinheit an seiner äußeren Oberfläche mit Materialerhebungen versehen, insbesondere Wülsten, Stegen, Zähnen o. dgl.. Die Höhen dieser Materialerhebungen liegen hierbei mit Vorzug im Bereich von 0,03 mm bis 0,4 mm. Zusätzlich oder statt dessen könnte auch die Wand des jeweiligen einen Verbindungszapfen aufnehmenden Hohlraums mit Materialerhebungen versehen sein, insbesondere Wülsten, Stegen, Zähnen o. dgl.. Die Höhen dieser Materialerhebungen liegen hierbei ebenfalls mit Vorzug im Bereich von 0,03 mm bis 0,4 mm.

Mit Vorteil werden diese Materialerhebungen durch einen Umformprozess, wie Rollieren oder Rändeln, in die Oberfläche des Verbindungszapfens und nach Möglichkeit auch in die Innenoberfläche des Hohlraums eingebracht. Der Vorteil besteht in den damit verbundenen Materialverfestigungen, was zur Reduktion von Spänen und der Verbesserung der Verbindung führt.

In einer vorteilhaften Ausführungsform der Erfindung ist die Außenkontur des Eingriffsabschnitts im Wesentlichen zylindermantelförmig, d. h. abgesehen von den vorzugsweise vorhandenen äußeren Materialerhebungeri, endseitigen Einlauffasen, Nebenformelementen o. dgl.. Die inneren Öffnungen der Hohlwellen sind vorzugsweise zumindest in ihren die Eingriffsabschnitte aufnehmenden achsialen Bereichen, vorzugsweise über ihre gesamten achsialen Ausdehnungen, im Wesentlichen zylindrisch ausgebildet, d. h. abgesehen von gegebenenfalls vorhandenen Materialerhebungen, einer endseitigen Einlauffase, Nebenformelementen o. dgl..

Vorzugsweise sind die äußeren Mantelflächen der Hohlwellen im Wesentlichen zylindermantelförmig ausgebildet, d. h. abgesehen von Nebenformelementen, Fasen, Materialerhebungen o. dgl..

Mit Vorteil ist vor der umformenden Herstellung der Materialerhebungen der Innendurchmesser des zylindrisch ausgebildeten Hohlraums etwas größer als der Außendurchmesser des zylindermantelförmigen Verbindungszapfens, so dass beide Teile mit etwas Spiel ineinander geschoben werden könnten, wobei erst durch die mit der Erzeugung der Materialerhebungen, in zumindest eines der beiden Teile, verbundene Durchmesservergrößerung bzw. Durchmesserverkleinerung die für den Pressverband notwendige teilweise Überdeckung bewirkt wird. Dadurch wird es möglich Form- Maß- und Lageabweichungen der zylindrischen Innenform des Hohlraums und der zylindrischen Mantelfläche des Verbindungszapfens auszugleichen. Ferner wird eine Ausrichtung der zu fügenden Teile zueinander vereinfacht. Zusätzlich wird die Verbindung mit Vorzug so ausgelegt, dass eine Aufweitung des Außendurchmessers des Bereiches des Fügepartners, in den der Verbindungszapfen eindringt, nahezu verhindert ist. Dabei sollen die Werte der Aufweitung des Außendurchmessers unterhalb von 0,2mm besonders bevorzugt unterhalb von 0,05mm liegen. Dies reduziert das Materialvolumen, das entfernt werden muss, falls im Bereich der Fügestelle ein konstanter Außendurchmesser gefordert wird. Ferner senkt dies die Rissgefahr in der Wandung des Hohlraums, so dass die Verbindungsfestigkeit gewährleistet ist. Im Fall einer nichtzylindrischen Ausbildung des Verbindungszapfens und des Hohlraums gilt dies analog. Die nur geringe Aufweitung ist in diesem Fall sogar noch wichtiger, da nichtrunde Umfangskonturen eher zu einer Kerbwirkung neigen und sich leichter Risse ausbilden können.

In einer vorteilhaften Ausgestaltung der Erfindung sind an den zueinander gerichteten Enden der Hohlwellen und/oder an den Enden der Eingriffsabschnitte Einlauffasen ausgebildet.

Der zwischen dem jeweiligen Eingriffsabschnitt und der jeweiligen Hohlwelle ausgebildete Presssitz ist in achsialer Richtung (= in Richtung der Drehachse der Antriebswelle) zumindest kraftschlüssig. Die Rückfederung bewirkt zusätzlich eine in achsiale Richtung formschlüssig wirkende Komponente der Verbindung, beispielsweise durch Entspannung eines Abschnitts einer an der die innere Öffnung der Hohlwelle begrenzenden Wand angeordneten, in Längsrichtung verlaufenden Materialerhebung, welcher Abschnitt bezogen auf die Einschubrichtung des Eingriffsabschnitts in den inneren Hohlraum hinter einer an der äußeren Oberfläche des Eingriffsabschnitts angeordneten, in Umfangsrichtung verlaufenden Materialerhebung liegt.

In Umfangsrichtung (also bezüglich einer Drehmomentübertragung) ist ein jeweiliger Eingriffsabschnitt in der jeweiligen Hohlwelle durch den Presssitz zumindest kraftschlüssig gehalten. Vorzugsweise ist die Verbindung zusätzlich formschlüssig ausgebildet. Beispielsweise kann dies durch in achsialer Richtung verlaufende Materialerhebungen an der Außenfläche des Eingriffsabschnitts und/oder an der die innere Öffnung der Hohlwelle umgebenden Wand in ihrem Bereich des Presssitzes erreicht werden, welche sich bei der Ausbildung des Presssitzes in das Material des anderen der über die Pressverbindung verbundenen Teile einformen bzw. eingraben. Vorzugsweise werden die hierbei ausgebildeten Vertiefungen nicht oder nur zu einem geringen Grad spanabhebend sondern vielmehr ganz oder zumindest überwiegend durch Materialverdrängung gebildet.

Die Funktionseinheit umfasst erfindungsgemäß ein zur Drehachse der Antriebswelle koaxiales Wellenteil, welches die ersten und zweiten Eingriffsabschnitte aufweist, wobei das Funktionsteil und das Wellenteil in separaten Fertigungsprozessen hergestellte Teile sind und das Funktionsteil mit dem Wellenteil zumindest drehfest, vorzugsweise starr, verbunden ist. Hierbei durchsetzt das Wellenteil vorzugsweise eine innere Ausnehmung des Funktionsteils. Die starre Festsetzung des Funktionsteils am Wellenteil kann in unterschiedlicher Weise kraft- und/oder form- und/oder stoffschlüssig erfolgen, beispielsweise wie dies von der Verbindung von Nocken mit einer Tragwelle bei gebauten Nockenwellen her bekannt ist. Insbesondere kann die Verbindung durch einen Presssitz realisiert werden. Für einen solchen Presssitz kommen wiederum die bereits vorausgehend im Zusammenhang mit dem Presssitz zwischen dem jeweiligen Eingriffsabschnitt und der jeweiligen Hohlwelle beschriebenen Ausbildungsmöglichkeiten in Betracht. Beispielsweise kann der Presssitz in einer Weise ausgebildet sein, wie dies von Nockenwellen mit auf eine Tragwelle aufgepressten Nocken her bekannt ist, z. B. in der im in der Beschreibungseinleitung genannten Stand der Technik beschriebenen Weise.

Eine vorteilhafte Ausgestaltung der Erfindung sieht vor, dass das Wellenteil insgesamt im Wesentlichen zylindrisch ausgebildet ist, d. h. abgesehen von Materialerhebungen, Einlauffasen, Nebenformelementen o. dgl., wobei eine im Wesentlichen hohlzylindrische Ausbildung bevorzugt ist.

Weitere Vorteile und Einzelheiten der Erfindung werden im Folgenden anhand der beiliegenden Zeichnung erläutert. In dieser zeigen:
- Fig. 1: ein Ausführungsbeispiel eines in Form eines Nockens ausgebildeten Funktionsteils, in Schrägsicht;
- Fig. 2: ein Ausführungsbeispiel eines in Form einer Kurven- oder Exzenterscheibe ausge- bildeten Funktionsteils, in Seitenansicht;
- Fig. 3: einen schematischen Längsmittelschnitt durch eine Nockenwelle gemäß dem Stand der Technik;
- Fig. 4: einen Längsmittelschnitt durch einen einen Nocken aufweisenden Abschnitt einer Nockenwelle gemäß einer ersten Ausführungsform der Erfindung (Schnittlinie A-A von Fig. 5);
- Fig. 5: einen Querschnitt durch die Nockenwelle (Schnittlinie B-B in Fig. 4);
- Fig. 6a: eine Schrägsicht des Wellenteils und des Nockens der Funktionseinheit, vor dem Aufpressen des Nockens;
- Fig. 6b: eine Schrägsicht der Funktionseinheit und der Endabschnitte der ersten und zwei- ten Hohlwellen, vor dem Zusammenpressen;
- Fig. 6c: eine Schrägsicht nach dem Zusammenpressen;
- Fig. 7 bis 9: Darstellungen analog Fig. 4, 5 und 6C einer modifizierten Ausführungsform;
- Fig. 10: einen Längsmittelschnitt eines Abschnitts einer Nockenwelle gemäß einer dritten Ausführungsform der Erfindung;
- Fig. 11: einen Längsmittelschnitt durch einen Abschnitt einer Nockenwelle gemäß einer vierten Ausführungsform der Erfindung;
- Fig. 12: einen Längsmittelschnitt durch einen Abschnitt einer Antriebswelle gemäß einer siebten Ausführungsform der Erfindung;
- Fig. 13: einen Längsmittelschnitt durch einen Abschnitt einer Antriebswelle gemäß einer achten Ausführungsform der Erfindung;
- Fig. 14: einen Schnitt entlang der Linie C-C von Fig. 8.

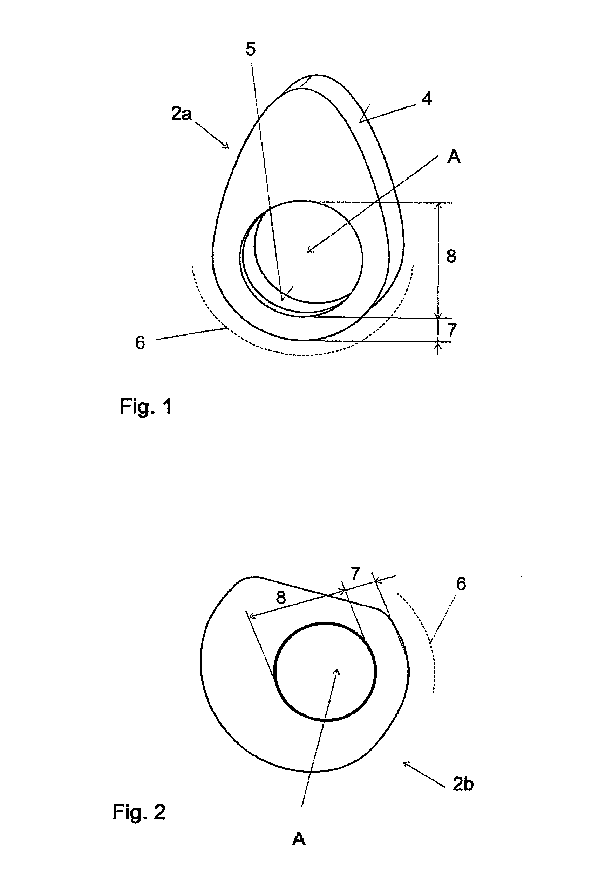

In Fig. 1 ist beispielhaft als Funktionsteil einer Nockenwelle ein Nocken 2a mit einer Nockenerhebung einer Nockenspitze dargestellt. Dessen Funktionsfläche 4, mit der im Betriebszustand der Nockenwelle ein Nockenfolger in Kontakt steht, teilt sich im Umfang auf in einen Grundkreisbereich 6 und einen Nockenerhebungsbereich. Der Nocken 2a besitzt eine innere Ausnehmung A mit einem Innendurchmesser 8. Die Differenz zwischen dem Außendurchmesser des Nockens 2a und dem Innendurchmesser 8 im Grundkreisbereich 6 wird als Gurtbreite 7 oder Bandbreite oder minimale Bandstärke bezeichnet. Die die innere Ausnehmung A begrenzende Wand 5 kann wie dargestellt glatt ausgebildet sein oder Erhebungen aufweisen, beispielsweise in achsialer Richtung der inneren Ausnehmung A verlaufende Zähne.

Die innere Ausnehmung A kann eine Einlauffase 9 aufweisen, um die, wie weiter unten ausgeführt, durch achsiales Einpressen bevorzugt erfolgende Festlegung des Nockens 2a zu verbessern bzw. erleichtern. An ihrer Mündung besitzt die Einlauffase 9 einen Öffnungsdurchmesser, der etwas größer ist als der ansonsten über die achsiale Ausdehnung der Ausnehmung A konstante Innendurchmesser 8.

Die innere Ausnehmung A ist im Wesentlichen zylindrisch, d. h. abgesehen von gegebenenfalls vorhandenen Erhebungen an der Wand 5, der bevorzugterweise vorhandenen Einlauffase 9 und eventuell weiteren Nebenformelementen (nicht dargestellt in Fig. 1).

Fig. 2 zeigt als weitere mögliche Ausführungsform eines Funktionsteils einer Nockenwelle einen in Form einer Kurven- oder Exzenterscheibe 2b ausgebildeten Nocken. Der Grundkreisbereich 6 erstreckt sich hier über einen vergleichsweise kleineren Abschnitt des Umfangs. Wiederum ist eine innere Ausnehmung A vorhanden, deren Wand in der im Zusammenhang mit dem Nocken 2a beschriebenen Weise ausgebildet sein kann. Der Innendurchmesser 8 der inneren Ausnehmung und die Gurtbreite 7 der Kurven- oder Exzenterscheibe 2b sind eingezeichnet. Eine solche Kurven- oder Exzenterscheiben 2b aufweisende Nockenwelle wird auch als Exzenterwelle bezeichnet.

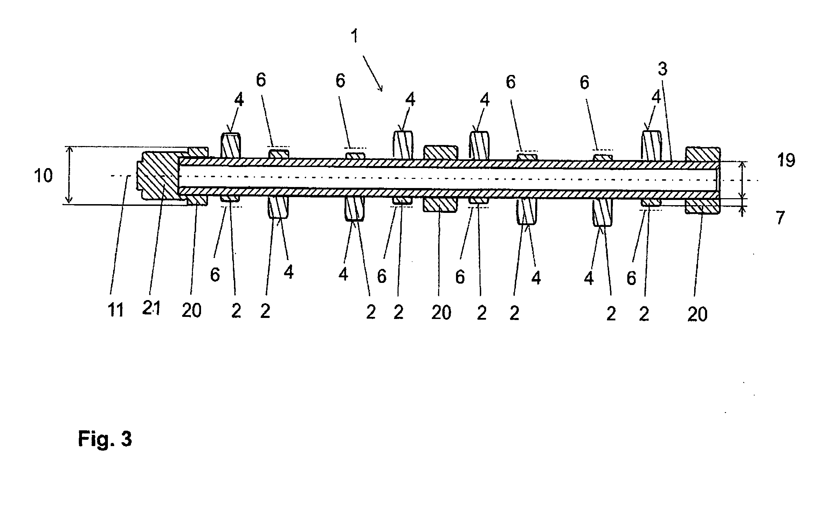

Zur Verdeutlichung ist in Fig. 3 eine Nockenwelle gemäß dem vorbekannten Stand der Technik, wie sie beispielsweise aus der DE 4121951 C1 und der DE 19925028 A1 im wesentlichen bekannt ist, schematisch dargestellt. Die Nockenwelle umfasst eine Tragwelle 3, die als Hohlwelle ausgebildet ist und eine Drehachse 11 aufweist, und darauf festgesetzte Funktionsteile 2, beispielsweise Nocken 2a mit Nockenspitzen entsprechend Fig. 1 oder in Form von Kurven- bzw. Exzenterscheiben 2b ausgebildeten Nocken entsprechend Fig. 2. Die Funktionsteile 2 sind auf Abschnitte der Tragewelle 3 achsial aufgepresst, in denen die Tragwelle 3 mittels einer gewindeähnlichen Rollierung in ihrem Umfang aufgeweitet ist. Im Grundkreisbereich 6 der Funktionsteile 2 ergibt sich der Außendurchmesser aus dem Außendurchmesser 19 der Tragwelle 3 plus der Gurtbreite 7 des jeweiligen Funktionsteils 2. Aus der Höhe der Nockenerhebung gegenüber dem Grundkreisbereich 6 bzw. der Höhe der Exzentererhebung gegenüber dem Grundkreisbereich 6 ergibt sich der maximale Außendurchmesser.

Die in Fig. 3 dargestellte Nockenwelle weist als weitere Funktionsteile Lager 20 mit einem Lagerdurchmesser 10 und ein Antriebsstück 21 auf. Weitere Funktionsteile wie nicht abschließend Achsiallagerscheiben, Sensorringe und Nockenwellenversteller können vorhanden sein. Die weiteren Funktionsteile können ebenfalls achsial auf die Tragwelle 3 aufgepresst sein.

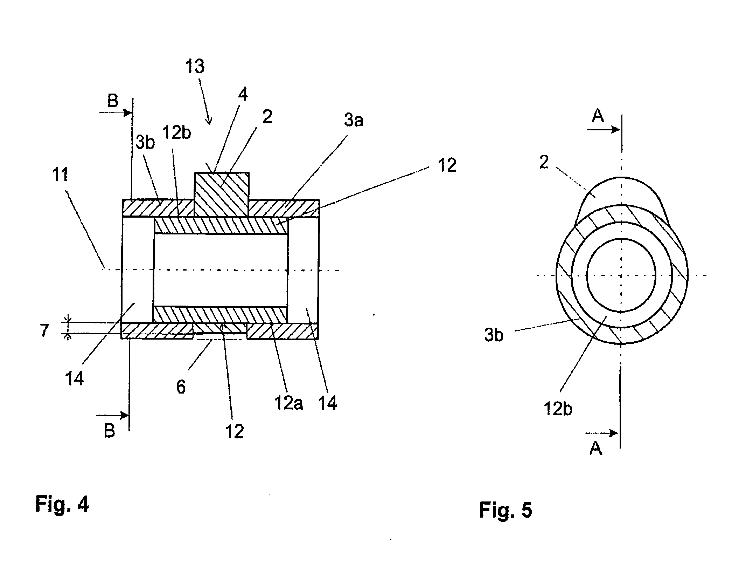

Ein erstes Ausführungsbeispiel der Erfindung wird im Folgenden anhand der Fig. 4 bis 6 erläutert, wobei für analoge Teile die gleichen Bezugszeichen verwendet werden. Dargestellt ist ein achsialer Abschnitt einer in Form einer Nockenwelle ausgebildeten Antriebswelle, wobei im dargestellten achsialen Abschnitt ein als Nocken ausgebildetes Funktionsteil 2 angeordnet ist. Die Nockenwelle kann in jedem achsialen Abschnitt, in dem ein Nocken angeordnet ist, in der in den Fig. 4 bis 6c dargestellten Weise ausgebildet sein. In ihrer übrigen achsialen Ausdehnung kann sie in herkömmlicher Weise, beispielsweise entsprechend Fig. 3, ausgebildet sein.

Der das Funktionsteil 2 bildende Nocken hat im Ausführungsbeispiel gemäß den Fig. 4 bis 6c eine analoge Ausbildung wie anhand Fig. 1 beschrieben, wobei er im Vergleich zur Ausbildung der Nockenwelle gemäß Fig. 3 verringerte Durchmesser aufweisen kann.

Die Nockenwelle umfasst im in den Fig. 4 bis 6c dargestellten achsialen Abschnitt eine erste Hohlwelle 3a und eine zweite Hohlwelle 3b. Diese beiden Hohlwellen sind separate, in Richtung der Drehachse 11 der Nockenwelle voneinander beabstandete Teile, die koaxial zueinander liegen, wobei ihre Achsen mit der Drehachse 11 der Nockenwelle zusammenfallen, und die vorzugsweise die gleichen Innen- und Außendurchmesser aufweisen.

Die Hohlwellen 3a, 3b sind über eine Funktionseinheit 13 starr miteinander verbunden, also drehfest und achsial gegeneinander unverschiebbar. Die Funktionseinheit 13 umfasst das Funktionsteil 2 und ein in einem separaten Fertigungsprozess hergestelltes Wellenteil 12, das eine Art "Hilfswelle" bildet. Das Wellenteil 12 ist beispielsweise wie dargestellt als Hohlwelle ausgebildet, kann aber auch massiv ausgebildet sein. Das Funktionsteil 2, das achsial zwischen den Hohlwellen 3a, 3b angeordnet ist, ist mit dem Wellenteil 12 zumindest drehfest verbunden, vorzugsweise auch in achsialer Richtung unverschiebbar verbunden, also insgesamt starr verbunden. Das Funktionsteil 2 kann wie dargestellt an den stirnseitigen Enden der Hohlwellen 3a, 3b anliegen oder auch von diesen beabstandet sein.

Beispielsweise kann die Verbindung zwischen dem Funktionsteil 2 und dem Wellenteil 12 als achsiale Pressverbindung ausgebildet sein, so wie diese bei herkömmlichen Nockenwellen (vgl. Fig. 3) für die Verbindung zwischen den Nocken und der Tragwelle bekannt ist. Vorzugsweise wird das Wellenteil 12 im Bereich des Presssitzes mit dem Funktionsteil 2 mit Materialerhebungen 22, z. B. Wülsten, Stegen, Zähnen o. dgl. versehen. Diese Materialerhebungen 22 werden beim Aufpressen des Funktionsteils 2 verformt, wodurch ein starker und sicherer Presssitz ausgebildet werden kann.

Die Materialerhebungen 22 können umlaufend ausgebildet sein, wobei sie eine Steigung nach Art eines Gewindes besitzen können oder ringförmig verlaufen können. Solche Materialerhebungen 22 können auch als Rollierung oder als ringförmiger Nutenrändel bezeichnet werden. Die Materialerhebungen 22 könnten auch eine andere Form aufweisen, beispielsweise in achsialer Richtung verlaufen. Derartige achsial verlaufende Materialerhebungen werden auch als achsiales Nutenrändel bezeichnet. Auch in eine schräge Richtung verlaufende Stege, Wülste oder Zähne oder andere Arten von Materialerhebungen, beispielsweise Diamanträndel, könnten vorgesehen sein.

Die Materialerhebungen 22 werden vorzugsweise durch Materialverdrängung ausgebildet, insbesondere mittels rollender Werkzeuge, wie sie auch zum Herstellen von aufgerollten Gewinden dienen. Ein Vorteil der Ausbildung durch Umformung besteht in den damit verbundenen Materialverfestigungen, was zur Reduktion von Spänen und der Verbesserung der Verbindung führt.

Zusätzlich zu den Materialerhebungen 22 am Wellenteil 12 oder statt dessen kann die die innere Ausnehmung A des Nockens begrenzende Wand 5 mit Materialerhebungen versehen sein. Diese Materialerhebungen können die zuvor im Zusammenhang mit der äußeren Oberfläche des Wellenteils 12 im Bereich des Presssitzes mit dem Funktionsteil 2 beschriebenen Formen aufweisen. Eine bevorzugte Ausführungsform von solchen Materialerhebungen an der die innere Ausnehmung A begrenzenden Wand 5 des Funktionsteils 2 sind hierbei in achsialer Richtung verlaufende Zähne. Solche Zähne können beim Aufpressen des Funktionsteils 2 Vertiefungen in diesem bzw. in dessen Materialerhebungen 22 ausformen. Durch diese Vertiefungen kann eine gegen eine relative Verdrehung des Funktionsteils 2 gegenüber dem Wellenteil 12 formschlüssig wirkende Verbindung ausgebildet werden. Vorzugsweise werden solche Vertiefungen beim achsialen Aufpressen des Funktionsteils 2 nicht oder nur zu einem geringen Grad spanabhebend sondern vielmehr ganz oder zumindest überwiegend durch Materialverdrängung gebildet.

Mit Vorteil ist der Durchmesser der inneren Ausnehmung A des Nockens etwas größer als der Außendurchmesser des Wellenteils 12, sodass beide Teile mit etwas Spiel ineinander geschoben werden könnten, wobei erst durch die mit der Einbringung der Materialerhebungen, in zumindest eines der beiden Teile, verbundenen Durchmesservergrößerung bzw. Durchmesserverkleinerung, die für den Pressverband notwendige teilweise Überdeckung hervorgerufen wird. Dadurch wird es möglich, Toleranzen für die Herstellung der Ausnehmung A des Nockens und der Mantelfläche des Wellenteils 12 auszugleichen. Zusätzlich wird die Verbindung mit Vorzug so ausgelegt, dass eine Aufweitung des Außendurchmessers des Nockens nahezu verhindert wird. Dabei sollen die Werte der Aufweitung des Außendurchmessers unterhalb von 0,2mm, besonders bevorzugt unterhalb von 0,05mm liegen. Dies senkt die Rissgefahr in der die Ausnehmung A begrenzenden Wand 5, sodass die Verbindungsfestigkeit gewährleistet ist.

Das Wellenteil 12 ragt mit einem Eingriffsabschnitt 12a in die innere Öffnung 14 der ersten Hohlwelle 3a und mit einem Eingriffsabschnitt 12b in die innere Öffnung 14 der zweiten Hohlwelle 3b. Hierbei sind die Eingriffsabschnitte 12a, 12b mit den sie aufnehmenden Endabschnitten der Hohlwellen 3a, 3b jeweils durch einen Presssitz verbunden. Durch diesen Presssitz ist der jeweilige Eingriffsabschnitt 12a, 12b in achsialer Richtung unverschiebbar sowie unverdrehbar mit der jeweiligen Hohlwelle 3a, 3b verbunden. Die Ausbildung des Presssitzes erfolgt durch ein jeweiliges achsiales Einpressen des Eingriffsabschnitts 12a, 12b in den Endabschnitt der jeweiligen Hohlwelle 3a, 3b.

Bevorzugt werden die Eingriffsabschnitte 12a, 12b mit Materialerhebungen 23 versehen. Diese Materialerhebungen 23 werden beim Einpressen des jeweiligen Eingriffsabschnitts 12a, 12b in die jeweilige innere Öffnung 14 verformt, wodurch ein starker und sicherer Presssitz ausgebildet werden kann.

Beispielsweise können die Materialerhebungen 23 von Wülsten, Stegen, Zähnen o. dgl. gebildet werden. In einer möglichen Ausbildungsform verlaufen diese Materialerhebungen 23 in Umfangsrichtung. Hierbei können sie einen ringförmigen Verlauf besitzen oder es kann eine Steigung nach Art eines Gewindes vorgesehen sein. Solche Materialerhebungen 23 können auch als Rollierung oder als ringförmiger Nutenrändel bezeichnet werden.

Die von Wülsten, Stegen, Zähnen o. dgl. gebildeten Materialerhebungen 23 könnten auch eine andere Form aufweisen, beispielsweise in achsialer Richtung verlaufen. Derartige achsial verlaufende Materialerhebungen werden auch als achsiales Nutenrändel bezeichnet. Auch in schräge Richtung verlaufende Wülste, Stege oder Zähne oder andere Arten von Materialerhebungen, beispielsweise Diamanträndel, könnten vorgesehen sein.

Die Materialerhebungen 23 werden vorzugsweise durch Materialverdrängung ausgebildet, insbesondere mittels rollender Werkzeuge, wie sie auch zum Herstellen von aufgerollten Gewinden dienen. Ein Vorteil der Ausbildung durch einen Umformprozess besteht in den damit verbundenen Materialverfestigungen, was zur Reduktion von Spänen und der Verbesserung der Verbindung führt.

Zusätzlich zu den Materialerhebungen 23 der Eingriffsabschnitte 12a, 12b oder statt dessen kann die die jeweilige innere Öffnung 14 begrenzende Wand, zumindest in dem Abschnitt, in welchem die Pressverbindung mit dem Eingriffsabschnitt 12a, 12b erfolgt, mit Materialerhebungen versehen sein. Diese Materialerhebungen können die bereits im Zusammenhang mit den Eingriffsabschnitten beschriebene Formen aufweisen. Eine bevorzugte Ausführungsform von solchen Materialerhebungen an der die innere Öffnung 14 begrenzenden Wand sind hierbei in achsialer Richtung verlaufende Zähne. Solche Zähne können beim Einpressen des zugehörigen Eingriffsabschnitts 12a, 12b Vertiefungen in diesen bzw. in dessen Materialerhebungen ausformen. Durch diese Vertiefungen kann eine gegen eine relative Verdrehung des Eingriffsabschnitts 12a, 12b gegenüber der Hohlwelle 3a, 3b formschlüssig wirkende Verbindung ausgebildet werden. Vorzugsweise werden solche Vertiefungen beim Einpressen des Eingriffsabschnitts 12a, 12b nicht oder nur zu einem geringen Grad spanabhebend sondern vielmehr ganz oder zumindest überwiegend durch Materialverdrängung gebildet.

Mit Vorteil ist der Innendurchmesser der inneren Öffnung 14 der jeweiligen Hohlwelle 3a, 3b etwas größer als der Außendurchmesser des jeweiligen Eingriffsabschnitts 12a, 12b, sodass beide Teile mit etwas Spiel ineinandergeschoben werden könnten, wobei erst durch die mit der Einbringung der Materialerhebungen, in zumindest eines der beiden Teile, verbundenen Durchmesservergrößerung bzw. Durchmesserverkleinerung, die für den Pressverband notwendige teilweise Überdeckung hervorgerufen wird. Dadurch wird es möglich, dass Toleranzen für die Herstellung der Innenform der Hohlwellen 3a, 3b und der Mantelfläche der Eingriffsabschnitte 12a, 12b auszugleichen. Zusätzlich wird die Verbindung mit Vorzug so ausgelegt, dass eine Aufweitung des Außendurchmessers des Bereichs der jeweiligen Hohlwelle 3a, 3b, in dem der jeweilige Eingriffsabschnitt 12a 12b aufgenommen wird, nahezu verhindert wird. Dabei sollen die Werte der Aufweitung des Außendurchmessers unterhalb von 0,2mm, besonders bevorzugt unterhalb von 0,05mm liegen. Das senkt die Rissgefahr in der Wandung der jeweiligen Hohlwelle 3a, 3b, sodass die Verbindungsfestigkeit gewährleistet ist.

Wenn bei der in den Fig. 4 bis 6c dargestellten Ausführungsform der Nockenwelle das Funktionsteil 2 die gleiche Bundbreite 7 wie bei der herkömmlichen Nockenwelle gemäß Fig. 3 aufweist, so ist der Außendurchmesser der Nockenwelle im Grundkreisbereich 6 um die Wandstärke der Hohlwellen 3a, 3b geringer als bei der herkömmlichen Nockenwelle. Auch der Außendurchmesser im Bereich der Nockenspitze ist (bei gleicher Nockenerhebung) um diesen Betrag kleiner.

Im Ausführungsbeispiel gemäß Fig. 4 bis 6 ist der Außendurchmesser des Funktionsteils 2 im Grundkreisbereich kleiner als der Außendurchmesser der Hohlwellen 3a, 3b.

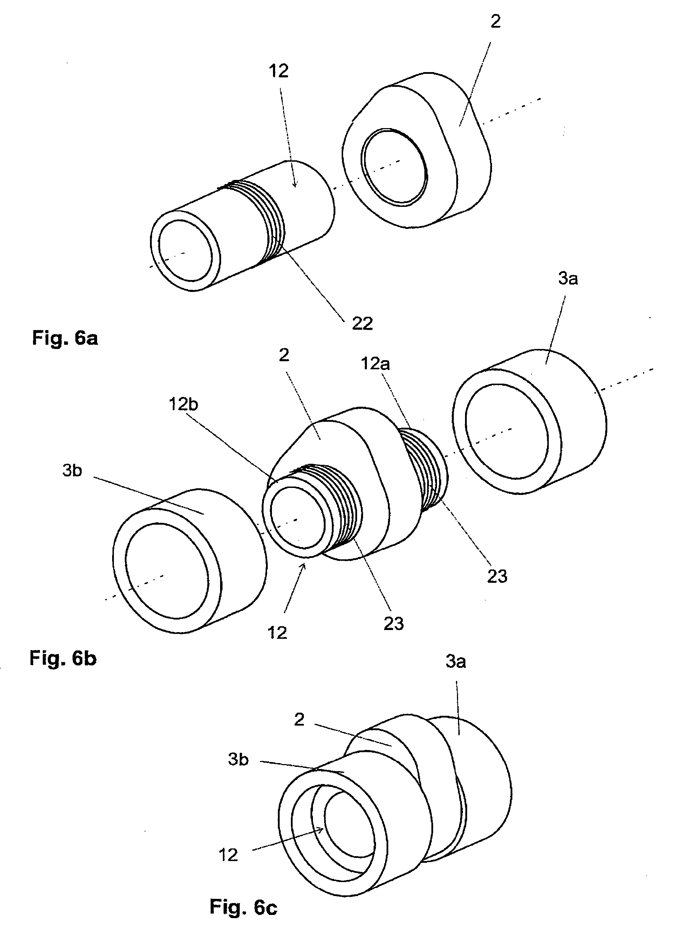

Vorzugsweise erfolgt die Herstellung wie in den Fig. 6a bis 6c dargestellt. Hierbei werden zunächst die Materialerhebungen 22 an der äußeren Oberfläche des Wellenteils 12 in ihrem den Nocken 2 festsetzenden achsialen Bereich und/oder an der die Ausnehmung A des Nockens 2 begrenzenden Wand 5 ausgebildet. In der Folge wird der Nocken 2 auf das Wellenteil 12 achsial aufgepresst. In der Folge werden die Materialerhebungen 23 an den Eingriffsabschnitten 12a, 12b und/oder an den die inneren Öffnungen 14 der Hohlwellen 3a, 3b begrenzenden Wände in ihren die Eingriffsabschnitte 12a, 12b aufnehmenden Abschnitten ausgebildet. Dieser Zustand ist in Fig. 6b dargestellt. In der Folge werden die Eingriffsabschnitte 12a, 12b in die Endabschnitte der Hohlwellen 3a, 3b eingepresst (vgl. Fig. 6c).

Unterschiedliche Modifikationen hierzu sind denkbar und möglich. Beispielsweise könnten vor dem Aufpressen des Nockens 2 auch die Materialerhebungen 23 an einem der Eingriffsabschnitte 12a, 12b ausgebildet werden und der Nocken 2 von der anderen Seite her aufgepresst werden. Weiters ist es denkbar und möglich, den Außendurchmesser der Materialerhebungen 22 größer als den Außendurchmesser der Materialerhebungen 23 auszubilden und den Innendurchmesser des Nockens 2 größer als den Außendurchmesser der Materialerhebungen 23 aber kleiner als den Außendurchmesser der Materialerhebungen 22 auszubilden bzw. einen solchen Innendurchmesser des Nockens 2 nach dem Versehen der Wand 5 mit Materialerhebungen herzustellen. Die Materialerhebungen 22, 23 am Wellenteil 12 könnten hierbei alle vor den Aufpressvorgängen geformt werden.

Das Funktionsteil 2 könnte beispielsweise auch als Nocken in Form einer Kurven- oder Exzenterscheibe 2b ausgebildet sein, wie sie beispielhaft in Fig. 2 dargestellt ist.

Außerdem könnte das Funktionsteil 2 auch ein anderes Funktionsteil der Nockenwelle als ein Nocken sein, beispielsweise ein Lager, ein mittig angeordnetes Antriebstück, eine Achsiallagerscheibe, ein Sensorring oder ein Nockenwellenversteller.

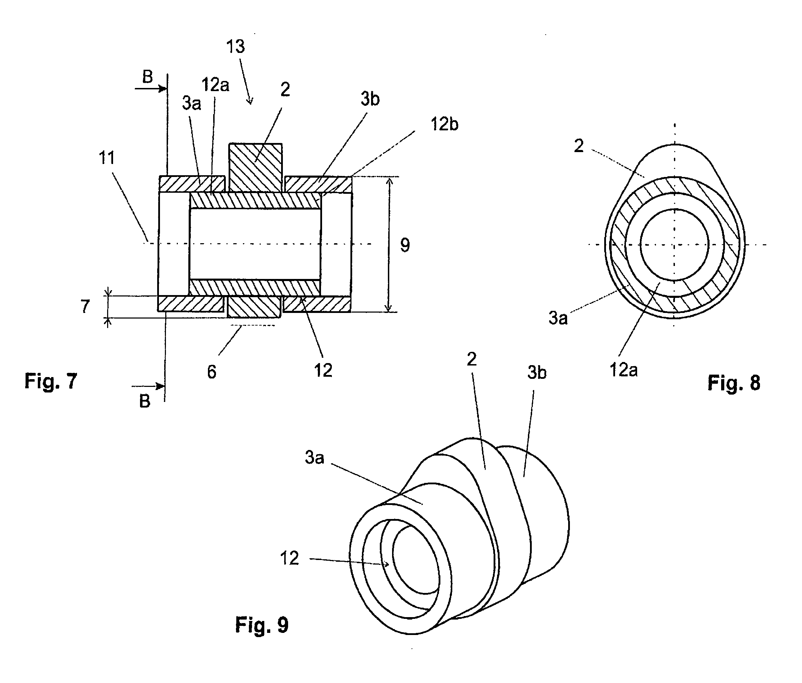

Die Ausführungsvariante gemäß den Fig. 7 bis 9 unterscheidet sich vom zuvor beschriebenen Ausführungsbeispiel nur dadurch, dass der Außendurchmesser des Funktionsteils 2 im Grundkreisbereich hier größer ist als der Außendurchmesser der Hohlwellen 3a, 3b.

Die Erfindung ist anwendbar sowohl für den Fall, dass die Funktionsbauteile 2, insbesondere die Nocken bündig bis an benachbarte Hohlwelle 3a bzw. 3b anschließend - ohne axialen Zwischenraum, angeordnet sind, als auch für den Fall, dass zwischen dem Funktionsbauteil 2 und dem benachbarten Ende der Hohlwelle ein axialer Abstand vorgesehen ist. Die Figur 4 veranschaulicht, eine Ausführungsform, bei der das Funktionsbauteil unmittelbar ohne Axialabstand an den benachbarten Hohlwellen 3a bzw. 3b anliegt. In der Figur 7 ist ein kleiner axialer Abstand schematisch dargestellt.

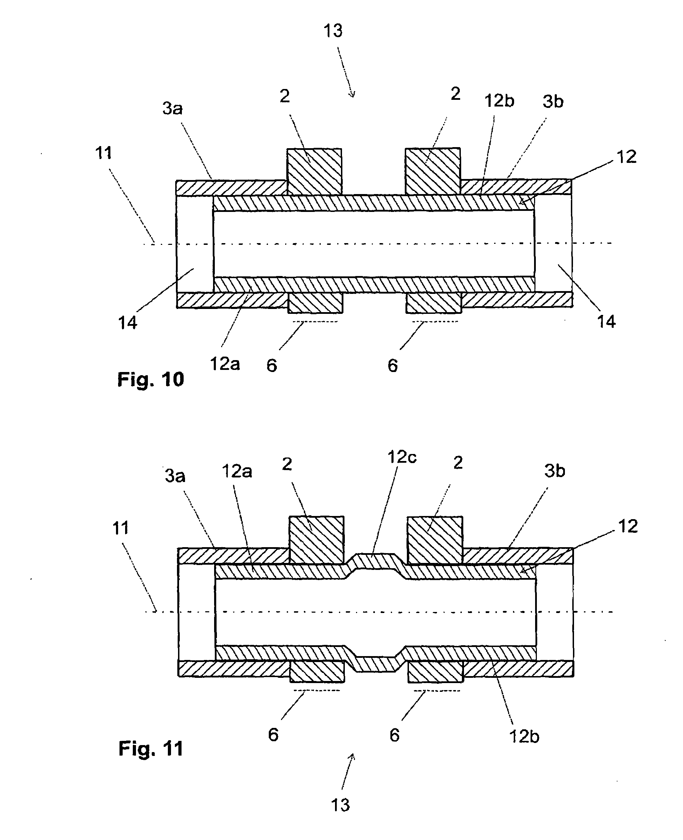

Das Ausführungsbeispiel gemäß Fig. 10 unterscheidet sich vom Ausführungsbeispiel gemäß Fig. 7 bis 9 dadurch, dass die Funktionseinheit 13 hier zwei achsial beabstandete Funktionsteile 2, beispielsweise Nocken 2a mit Nockenspitzen oder Kurven- bzw. Exzenterscheiben 2b, umfasst, die auf einem gemeinsamen Wellenteil 12 angeordnet sind. Eingriffsabschnitte 12a , 12b des Wellenteils 12 sind in der zuvor beschriebenen Weise mit der ersten und zweiten Hohlwelle 3a, 3b durch Presssitze verbunden. Die Verbindung der Funktionsteile 2 mit dem Wellenteil 12 kann ebenfalls in der bereits beschriebenen Weise erfolgen. Die Funktionsteile 2 liegen wiederum achsial zwischen der ersten und zweiten Hohlwelle 3a, 3b, wobei wie dargestellt jedes der beiden Funktionsteile 2 stirnseitig an einer der beiden Hohlwellen 3a, 3b anliegen kann.

Das in Fig. 11 dargestellte Ausführungsbeispiel unterscheidet sich von dem in Fig. 10 dargestellten Ausführungsbeispiel nur dadurch, dass das Wellenteil 12 im achsial zwischen den Funktionsteilen 2 liegenden Bereich einen radial aufgeweiteten Abschnitt 12c aufweist. Der radial aufgeweitete Abschnitt 12c kann eine spezielle Funktion für die Antriebswelle übernehmen. So kann dieser Bereich als Sechskant zur Bildung einer Eingriffskontur für ein Werkzeug zur Verschraubung, Positionierung oder Halterung der Antriebswelle während der Montage in einen Verbrennungsmotor dienen. Alternativ oder in Kombination können die Funktionsteile 2 auch zusätzlich gegen achsiale Verschiebung somit einerseits durch die jeweilige Hohlwelle 3a, 3b, an der sie stirnseitig anliegen, andererseits durch den radial aufgeweiteten Abschnitt 12c des Wellenteils 12 gesichert werden (zusätzlich zu der durch den bevorzugten Presssitz bewirkten achsialen Halterung). Das Wellenteil 12 ist bevorzugt wieder hohl ausgebildet, wobei eine massive Ausbildung denkbar und möglich ist.

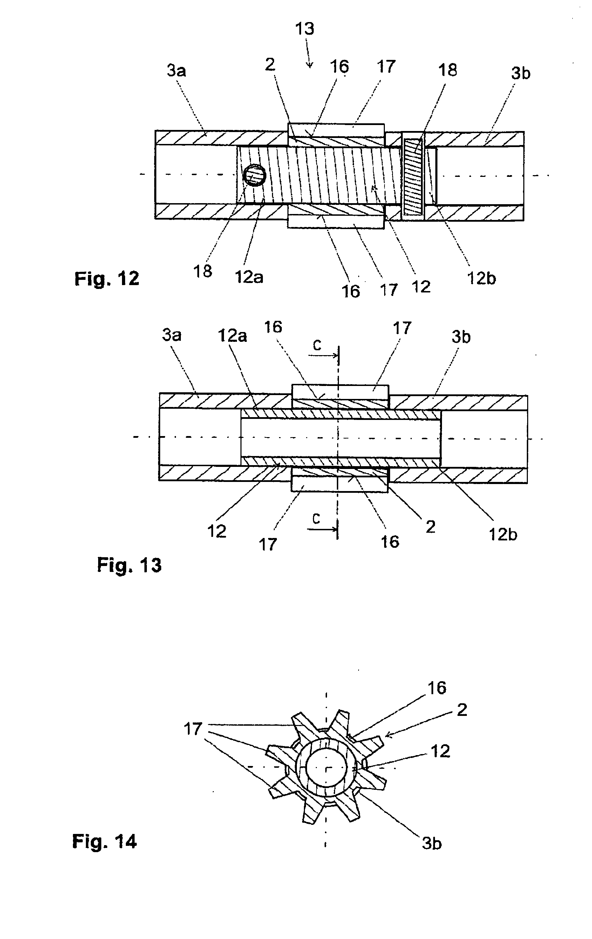

Ein weiteres Ausführungsbeispiel der Erfindung ist in Fig. 12 dargestellt. Die Antriebswelle umfasst hier zumindest ein Funktionsteil 2 in Form eines Zahnrads. Das Zahnrad besitzt Zähne 17 und dazwischenliegende Zahngründe 16. Das als Zahnrad ausgebildete Funktionsteil 2 ist wiederum Teil einer Funktionseinheit 13, über welche die koaxialen, vorzugsweise die gleichen Innen- und Außendurchmesser aufweisenden Hohlwellen 3a, 3b starr miteinander verbunden sind. Die Funktionseinheit 13 und die Hohlwellen 3a, 3b sind wiederum in separaten Fertigungsprozessen ausgebildete Bauteile.

Die Funktionseinheit 13 umfasst neben dem in Form eines Zahnrads ausgebildeten Funktionsteil 2 ein separates, beispielsweise wie dargestellt massiv ausgebildetes Wellenteil 12, auf dem das Zahnrad 2 drehfest und in achsialer Richtung unverschiebbar festgelegt ist, beispielsweise durch einen Presssitz. Ein solcher Presssitz kann die bereits im Zusammenhang mit der Festlegung des in Form eines Nocken ausgebildeten Funktionsteil 2 auf einem Wellenteil 12 beschriebene Ausbildung aufweisen. Das Wellenteil 12, das massiv ausgebildet ist, besitzt einen ersten und einen zweiten Eingriffsabschnitt 12a, 12b, über welche es durch einen jeweiligen Presssitz im Endabschnitt der jeweiligen Hohlwelle 3a, 3b gehalten ist. Diese Pressverbindungen können die bereits beschriebene Ausbildung aufweisen.

Zusätzlich sind die Eingriffsabschnitte bei diesem Ausführungsbeispiel gegenüber den Hohlwellen 3a, 3b durch Befestigungszapfen 18 gesichert. Die Befestigungszapfen 18 durchsetzen radiale Öffnungen im Wellenteil 12 und in den Hohlwellen 3a, 3b. Diese radialen Öffnungen stellen Nebenformelemente in den Eingriffsabschnitten 12a, 12b und in den die Eingriffsabschnitte 12a, 12b aufnehmenden Endabschnitten der Hohlwellen 3a, 3b dar.

Das Ausführungsbeispiel gemäß den Fig. 13 und 14 unterscheidet sich von dem Ausführungsbeispiel gemäß Fig. 12 dadurch, dass die Befestigungszapfen 18 hier entfallen und die Funktionseinheit 13 anstelle eines massiven Wellenteils hier ein hohles Wellenteil 12 aufweist.

In der erfindungsgemäßen Art und Weise können auch Funktionseinheiten mit anderen Arten von Funktionsteilen, beispielsweise andere Arten von Getriebeteilen, wie Reibrädern usw., mit Hohlwellen der Antriebswelle verbunden sein.

### Legende zu den Hinweisziffern:

- 1: Antriebswelle
- 2: Funktionsteil
- 2a: Nocken
- 2b: Kurven- oder Exzenterscheibe
- 3: Tragwelle
- 3a: erste Hohlwelle
- 3b: zweite Hohlwelle
- 4: Funktionsfläche
- 5: Wand
- 6: Grundkreisbereich
- 7: Gurtbreite
- 8: Innendurchmesser
- 9: Einlauffase
- 10: Lagerdurchmesser
- 11: Drehachse
- 12: Wellenteil
- 12a: Eingriffsabschnitt
- 12b: Eingriffsabschnitt
- 12c: aufgeweiteter Abschnitt
- 13: Funktionseinheit
- 13a: Eingrifsabschnitt
- 13b: Eingriffsabschnitt
- 14: innere Öffnung
- 16: Zahngrund
- 17: Zahn
- 18: Befestigungszapfen
- 19: Außendurchmesser
- 20: Lager
- 21: Antriebsstück
- 22: Materialerhebung
- 23: Materialerhebung
- A: innere Ausnehmung

## Patentansprüche

1. Antriebswelle, welche mindestens zwei in Richtung der Drehachse (11) der Antriebswelle beabstandete, koaxiale Hohlwellen (3a, 3b), die jeweils eine innere Öffnung (14) aufweisen, und mindestens eine Funktionseinheit (13) umfasst, die mindestens ein, bezogen auf die Richtung der Drehachse (11) der Antriebswelle zwischen einer ersten und einer zweiten der Hohlwellen (3a, 3b) angeordnetes Funktionsteil (2) und erste und zweite in Richtung der Drehachse (11) der Antriebswelle sich erstreckende Eingriffsabschnitte (12a, 12b; 13a, 13b) aufweist, von denen der erste Eingriffsabschnitt (12a; 13a) in der inneren Öffnung (14) der ersten Hohlwelle (3a) und von denen der zweite Eingriffsabschnitt (12b) in der inneren Öffnung (14) der zweiten Hohlwelle (3b) angeordnet ist, wobei die Eingriffsabschnitte (12a, 12b; 13a, 13b) der Funktionseinheit (13) in die inneren Öffnungen (14) der Hohlwellen (3a, 3b) unter Ausbildung eines jeweiligen Presssitzes eingepresst sind und die ersten und zweiten Hohlwellen (3a, 3b) über die Funktionseinheit (13) starr miteinander verbunden sind, wobei die äußeren Oberflächen der Eingriffsabschnitte (12a, 12b; 13a, 13b) Materialerhebungen (23) und/oder die die innere Öffnung (14) der Hohlwelle (3a, 3b) begrenzende Wand der jeweiligen Hohlwelle (3a, 3b) im Endabschnitt, in dem der Presssitz mit dem jeweiligen Eingriffsabschnitt (12a, 12b; 13a, 13b) der Funktionseinheit (13) ausgebildet ist, Materialerhebungen aufweist, **dadurch gekennzeichnet, dass** die Funktionseinheit (13) ein Wellenteil (12) umfasst, welches die ersten und zweiten Eingriffsabschnitte (12a, 12b; 13a, 13b) aufweist, wobei das Funktionsteil (2) und das Wellenteil (12) separate Teile sind und das Funktionsteil (2) mit dem Wellenteil (12) drehfest verbunden ist.

2. Antriebswelle nach Anspruch 1, **dadurch gekennzeichnet, dass** die Materialerhebungen (23) der Eingriffsabschnitte (12a, 12b; 13a, 13b) und/oder der die innere Öffnung (14) der Hohlwelle (3a, 3b) begrenzenden Wand als Stege, Wülste oder Zähne ausgebildet sind.

3. Antriebswelle nach einem der Ansprüche 1 oder Anspruch 2, **dadurch gekennzeichnet, dass** die Eingriffsabschnitte (12a, 12b; 13a, 13b) koaxial zur Drehachse (11) der Antriebswelle liegen.

4. Antriebswelle nach einem der Ansprüche 1 bis 3, **dadurch gekennzeichnet, dass** das Funktionsteil (2) mit dem Wellenteil (12) starr verbunden ist.

5. Antriebswelle nach Anspruch 4, **dadurch gekennzeichnet, dass** das Wellenteil (12) eine innere Ausnehmung (A) des Funktionsteils (2) durchsetzt, wobei vorzugsweise das Funktionsteil (2) mit dem Wellenteil (12) durch einen Presssitz verbunden ist.

6. Antriebswelle nach Anspruch 5, **dadurch gekennzeichnet, dass** die äußere Oberfläche des Wellenteils (12) im achsialen Abschnitt der Pressverbindung mit dem Funktionsteil (2) Materialerhebungen (23) und/oder die die innere Ausnehmung (A) des Funktionsteils (2) begrenzende Wand des Funktionsteils (2) Materialerhebungen aufweist.

7. Antriebswelle nach einem der Ansprüche 4 bis 6, **dadurch gekennzeichnet, dass** das Wellenteil (12) in Form einer Hohlwelle ausgebildet ist.

8. Antriebswelle nach einem der Ansprüche 1 bis 7, **dadurch gekennzeichnet, dass** an den zueinander gerichteten Enden der Hohlwellen (3a, 3b) und/oder an den Enden der Eingriffsabschnitte (12a, 12b; 13a, 13b) Einlauffasen ausgebildet sind.

9. Antriebswelle nach einem der Ansprüche 1 bis 8, **dadurch gekennzeichnet, dass** das Funktionsteil (2) ein Nocken, vorzugsweise ein Nocken (2a) mit einer Nockenspitze oder ein in Form einer Kurven- oder Exzenterscheibe (2b) ausgebildeter Nocken, oder ein Zahnrad ist.

10. Antriebswelle nach einem der Ansprüche 1 bis 9, **dadurch gekennzeichnet, dass** die äußeren Oberflächen der Eingriffsabschnitte (12a, 12b; 13a, 13b) im Wesentlichen zylindermantelförmig ausgebildet sind.

11. Antriebswelle nach einem der Ansprüche 1 bis 10, **dadurch gekennzeichnet, dass** die inneren Oberflächen der Hohlwellen (3a, 3b) zumindest in ihren die Eingriffsabschnitte (12a, 12b; 13a, 13b) aufnehmenden achsialen Bereichen im Wesentlichen zylindermantelförmig ausgebildet sind.

12. Verfahren zur Herstellung einer Antriebswelle nach einem der Ansprüche 1 bis 11, **dadurch gekennzeichnet, dass** die erste und zweite Hohlwelle (3a, 3b) und die mindestens eine Funktionseinheit (13) in separaten Fertigungsprozessen hergestellt werden und dass zur starren Verbindung der ersten und zweiten Hohlwelle (3a, 3b) die Eingriffsabschnitte (12a, 12b; 13a, 13b) der Funktionseinheit (13) in die zueinander gerichteten Endabschnitte der inneren Öffnungen (14) der Hohlwellen (3a, 3b) eingepresst werden.

13. Verfahren nach Anspruch 12, **dadurch gekennzeichnet, dass** zur starren Verbindung des Funktionsteils (2) mit einem die Eingriffsabschnitte (12a, 12b; 13a, 13b) aufweisenden Wellenteil (12) der Funktionseinheit (13) das Funktionsteil (2) mit einer inneren Ausnehmung (A) auf das Wellenteil (12) aufgepresst wird.

14. Verfahren nach Anspruch 13, **dadurch gekennzeichnet, dass** der Durchmesser der inneren Ausnehmung (A) des Funktionsteils gegenüber dem äußeren Durchmesser des Wellenteils (12) zunächst mit Spiel ausgebildet wird und die für den Pressverband notwenige teilweise Überdeckung durch eine umformende Ausbildung von Materialerhebungen an der äußeren Oberfläche des Wellenteils (12) und/oder an der die innere Ausnehmung (A) begrenzenden Wand des Funktionsteils (2) ausgebildet wird.

15. Verfahren nach einem der Ansprüche 12 bis 14, **dadurch gekennzeichnet, dass** die Innendurchmesser der Hohlwellen (3a, 3b) in ihren die Eingriffsabschnitte (12a, 12b; 13a, 13b) aufnehmenden achsialen Bereichen zunächst mit Spiel gegenüber den Außendurchmessern der Eingriffsabschnitte (12a, 12b; 13a, 13b) ausgebildet werden und die für den Pressverband notwendige teilweise Überdeckung durch eine umformende Ausbildung von Materialerhebungen an den äußeren Oberflächen der Eingriffsabschnitte (12a, 12b; 13a, 13b) und/oder den Oberflächen der die inneren Öffnungen (14) der Hohlwellen (3a, 3b) begrenzenden Wände ausgebildet wird.

## Claims

1. A drive shaft comprising at least two coaxial hollow shafts (3a, 3b), spaced apart in the direction of the rotational axis (11) of the drive shaft, each with an inner opening (14), and comprising at least one functional unit (13), which functional unit (13) has at least one functional part (2), arranged between a first and a second of the hollow shafts (3a, 3b) related to the direction of the rotational axis (11) of the drive shaft, and first and second engagement portions (12a, 12b; 13a, 13b) extending in the direction of the rotational axis (11) of the drive shaft, of which the first engagement portion (12a; 13a) is arranged in the inner opening (14) of the first hollow shaft (3a) and of which the second engagement portion (12b) is arranged in the inner opening (14) of the second hollow shaft (3b), wherein the engagement portions (12a, 12b; 13a, 13b) of the functional unit (13) are forced into the inner openings (14) of the hollow shafts (3a, 3b) with the formation of a respective force fit and the first and second hollow shafts (3a, 3b) are rigidly connected to one another via the functional unit (13), wherein the outer surfaces of the engagement portions (12a, 12b; 13a, 13b) have material elevations (23) and/or the wall, bounding the inner opening (14) of the hollow shaft (3a, 3b), of the respective hollow shaft (3a, 3b) has material elevations in the end portion in which the force fit is formed with the respective engagement portion (12a, 12b; 13a, 13b) of the functional unit (13), **characterised in that** the functional unit (13) comprises a shaft part (12) which has the first and second engagement portions (12a, 12b; 13a, 13b), wherein the functional part (2) and the shaft part (12) are separate parts and the functional part (2) is connected to the shaft part (12) so as to be fastened against relative rotation.

2. A drive shaft according to claim 1, **characterised in that** the material elevations (23) of the engagement portions (12a, 12b; 13a, 13b) and/or of the wall bounding the inner opening (14) of the hollow shaft (3a, 3b) are ribs, swellings or teeth.

3. A drive shaft according to one of claims 1 or 2, **characterised in that** the engagement portions (12a, 12b; 13a, 13b) lie coaxial to the rotational axis (11) of the drive shaft.

4. A drive shaft according to any one of claims 1 to 3, **characterised in that** the functional part (2) is rigidly connected to the shaft part (12).

5. A drive shaft according to claim 4, **characterised in that** the shaft part (12) passes through an inner cut-out (A) of the functional part (2), wherein the functional part (2) is preferably connected to the shaft part (12) by a force fit.

6. A drive shaft according to claim 5, **characterised in that** the outer surface of the shaft part (12) has material elevations (23) in the axial portion of the force fit with the functional part (2), and/or the wall, bounding the inner cut-out (A) of the functional part (2), of the functional part (2) has material elevations.

7. A drive shaft according to any one of claims 4 to 6, **characterised in that** the shaft part (12) is in the form of a hollow shaft.

8. A drive shaft according to any one of claims 1 to 7, **characterised in that** feed bevels are formed on the facing ends of the hollow shafts (3a, 3b) and/or on the ends of the engagement portions (12a, 12b; 13a, 13b).

9. A drive shaft according to any one of claims 1 to 8, **characterised in that** the functional part (2) is a cam, preferably a cam (2a) with a cam tip or a cam in the form of a cam disc or eccentric disc (2b), or a toothed wheel.

10. A drive shaft according to any one of claims 1 to 9, **characterised in that** the outer surfaces of the engagement portions (12a, 12b; 13a, 13b) are substantially in the form of a cylinder shell.

11. A drive shaft according to any one of claims 1 to 10, **characterised in that** the inner surfaces of the hollow shafts (3a, 3b) are substantially in the form of a cylinder shell, at least in their axial regions receiving the engagement portions (12a, 12b; 13a, 13b).

12. A method of producing a drive shaft according to any one of claims 1 to 11, **characterised in that** the first and second hollow shaft (3a, 3b) and the at least one functional unit (13) are produced in separate manufacturing processes, and **in that** the engagement portions (12a, 12b; 13a, 13b) of the functional unit (13) are forced into the facing end portions of the inner openings (14) of the hollow shafts (3a, 3b) in order to rigidly connect the first and second hollow shaft (3a, 3b).

13. A method according to claim 12, **characterised in that** the functional part (2) is forced onto the shaft part (12) by means of an inner cut-out (A) in order to rigidly connect the functional part (2) to a shaft part (12), having the engagement portions (12a, 12b; 13a, 13b), of the functional unit (13).

14. A method according to claim 13, **characterised in that** the diameter of the inner cut-out (A) of the functional part is at first formed with play with respect to the outer diameter of the shaft part (12) and the partial overlap required for the force fit is formed by a shaping of material elevations on the outer surface of the shaft part (12) and/or on the wall, bounding the inner cut-out (A), of the functional part (2).

15. A method according to any one of claims 12 to 14, **characterised in that** the inner diameters of the hollow shafts (3a, 3b) in their axial regions receiving the engagement portions (12a, 12b; 13a, 13b) are at first formed with play with respect to the outer diameters of the engagement portions (12a, 12b; 13a, 13b) and the partial overlap required for the force fit is formed by a shaping of material elevations on the outer surfaces of the engagement portions (12a, 12b; 13a, 13b) and/or on the surfaces of the walls bounding the inner openings (14) of the hollow shafts (3a, 3b).

## Revendications

1. Arbre d'entraînement qui comporte au moins deux arbres creux (3a, 3b) coaxiaux, espacés en direction de l'axe de rotation (11) de l'arbre d'entraînement, qui présentent chacun une ouverture intérieure (14), et au moins une unité fonctionnelle (13) qui présente au moins une partie fonctionnelle (2) disposée par rapport à la direction de l'axe de rotation (11) de l'arbre d'entraînement entre un premier et un second des arbres creux (3a, 3b), et des première et seconde sections d'engagement (12a, 12b ; 13a, 13b) s'étendant en direction de l'axe de rotation (11) de l'arbre d'entraînement, la première section d'engagement (12a ; 13a) étant disposée dans l'ouverture intérieure (14) du premier arbre creux (3a) et la seconde section d'engagement (12b) étant disposée dans l'ouverture intérieure (14) du second arbre creux (3b), les sections d'engagement (12a, 12b ; 13a, 13b) de l'unité fonctionnelle (13) étant enfoncées dans les ouvertures intérieures (14) des arbres creux (3a, 3b) en réalisant un ajustage serré respectif et les premier et second arbres creux (3a, 3b) étant reliés entre eux rigidement par l'unité fonctionnelle (13), les surfaces extérieures des sections d'engagement (12a, 12b ; 13a, 13b) présentant des élévations de matière (23) et/ou la paroi de l'arbre creux respectif (3a, 3b) délimitant l'ouverture intérieure (14) de l'arbre creux (3a, 3b) présentant des élévations de matière dans la section d'extrémité, dans laquelle l'ajustage serré est réalisé avec la section d'engagement (12a, 12b ; 13a, 13b) respective de l'unité fonctionnelle (13), **caractérisé en ce que** l'unité fonctionnelle (13) comporte une partie d'arbre (12) qui présente les première et seconde sections d'engagement (12a, 12b ; 13a, 13b), la partie fonctionnelle (2) et la partie d'arbre (12) étant des parties séparées et la partie fonctionnelle (2) étant reliée de manière fixe en rotation à la partie d'arbre (12).

2. Arbre d'entraînement selon la revendication 1, **caractérisé en ce que** les élévations de matière (23) des sections d'engagement (12a, 12b ; 13a, 13b) et/ou la paroi délimitant l'ouverture intérieure (14) de l'arbre creux (3a, 3b) est réalisée comme des moulures, des bourrelets ou des dents.

3. Arbre d'entraînement selon l'une quelconque des revendications 1 ou 2, **caractérisé en ce que** les sections d'engagement (12a, 12b ; 13a, 13b) sont coaxiales à l'axe de rotation (11) de l'arbre d'entraînement.

4. Arbre d'entraînement selon l'une quelconque des revendications 1 à 3, **caractérisé en ce que** la partie fonctionnelle (2) est reliée rigidement à la partie d'arbre (12).

5. Arbre d'entraînement selon la revendication 4, **caractérisé en ce que** la partie d'arbre (12) traverse un évidement intérieur (A) de la partie fonctionnelle (2), la partie fonctionnelle (2) étant reliée de préférence à la partie d'arbre (12) par un ajustage serré.

6. Arbre d'entraînement selon la revendication 5, **caractérisé en ce que** la surface extérieure de la partie d'arbre (12) présente des élévations de matière (23) dans la section axiale de la liaison à ajustement serré avec la partie fonctionnelle (2) et/ou la paroi de la partie fonctionnelle (2) délimitant l'évidement intérieur (A) de la partie fonctionnelle (2).

7. Arbre d'entraînement selon l'une quelconque des revendications 4 à 6, **caractérisé en ce que** la partie d'arbre (12) est réalisée sous la forme d'un arbre creux.

8. Arbre d'entraînement selon l'une quelconque des revendications 1 à 7, **caractérisé en ce que** des biseaux d'entrée sont réalisés sur les extrémités dirigées l'une vers l'autre des arbres creux (3a, 3b) et/ou sur les extrémités des sections d'engagement (12a, 12b ; 13a, 13b).

9. Arbre d'entraînement selon l'une quelconque des revendications 1 à 8, **caractérisé en ce que** la partie fonctionnelle (2) est une came, de préférence une came (2a) avec une pointe de came ou une came réalisée sous la forme d'un disque de came ou d'excentrique (2b), ou une roue dentée.

10. Arbre d'entraînement selon l'une quelconque des revendications 1 à 9, **caractérisé en ce que** les surfaces extérieures des sections d'engagement (12a, 12b ; 13a, 13b) sont réalisées sensiblement en forme d'enveloppe de cylindre.

11. Arbre d'entraînement selon l'une quelconque des revendications 1 à 10, **caractérisé en ce que** les surfaces intérieures des arbres creux (3a, 3b) sont réalisées sensiblement en forme d'enveloppe de cylindre au moins dans leurs zones axiales recevant les sections d'engagement (12a, 12b ; 13a, 13b).

12. Procédé de fabrication d'un arbre d'entraînement selon l'une quelconque des revendications 1 à 11, **caractérisé en ce que** les premier et second arbres creux (3a, 3b) et au moins une unité fonctionnelle (13) sont fabriqués dans des processus de fabrication séparés et **en ce que** pour la liaison rigide des premier et second arbres creux (3a, 3b), les sections d'engagement (12a, 12b ; 13a, 13b) de l'unité fonctionnelle (13) sont enfoncées dans les sections d'extrémité dirigées l'une vers l'autre des ouvertures intérieures (14) des arbres creux (3a, 3b).

13. Procédé selon la revendication 12, **caractérisé en ce que** pour la liaison rigide de la partie fonctionnelle (2) avec une partie d'arbre (12) présentant les sections d'engagement (12a, 12b ; 13a, 13b) de l'unité fonctionnelle (13), la partie fonctionnelle (2) est engagée par pression par un évidement intérieur (A) sur la partie d'arbre (12).

14. Procédé selon la revendication 13, **caractérisé en ce que** le diamètre de l'évidement intérieur (A) de la partie fonctionnelle est réalisé tout d'abord avec jeu par rapport au diamètre extérieur de la partie d'arbre (12) et **en ce que** le recouvrement partiel nécessaire à la liaison à ajustement serré est réalisé par une réalisation déformante d'élévations de matière sur la surface extérieure de la partie d'arbre (12) et/ou sur la paroi de la partie fonctionnelle (2) délimitant l'évidement intérieur (A).

15. Procédé selon l'une quelconque des revendications 12 à 14, **caractérisé en ce que** le diamètre intérieur des arbres creux (3a, 3b) est réalisé tout d'abord avec jeu, dans leurs zones axiales recevant les sections d'engagement (12a, 12b ; 13a, 13b), par rapport aux diamètres extérieurs des sections d'engagement (12a, 12b ; 13a, 13b) et **en ce que** le recouvrement partiel nécessaire à la liaison à ajustement serré est réalisé par une réalisation déformante de surélévations de matière sur les surfaces extérieures des sections d'engagement (12a, 12b ; 13a, 13b) et/ou sur les surfaces des parois délimitant les ouvertures intérieures (14) des arbres creux (3a, 3b).
